# EUROPÄISCHE PATENTSCHRIFT

(11) **EP 2 200 778 B1**
(45) Veröffentlichungstag und Bekanntmachung des Hinweises auf die Patenterteilung: **12.09.2012**
(21) Anmeldenummer: 08774894.3
(22) Anmeldetag: 08.07.2008
(51) Int. Cl.: B23K 26/06, F02P 23/04, H01S 3/0941, H01S 3/102, H01S 3/11

(54) **LASEREINRICHTUNG UND BETRIEBSVERFAHREN HIERFÜR**
LASER DEVICE, AND METHOD FOR THE OPERATION THEREOF
DISPOSITIF LASER ET SON PROCÉDÉ DE FONCTIONNEMENT

(30) Priorität: 14.09.2007 DE 102007043915
(43) Veröffentlichungstag der Anmeldung: 30.06.2010
(73) Patentinhaber: Robert Bosch GmbH, 70442 Stuttgart (DE)
(72) Erfinder: WEINROTTER, Martin, 70195 Stuttgart-Botnang (DE); WOERNER, Pascal, 70469 Stuttgart (DE); VOGEL, Manfred, 71254 Ditzingen (DE); RAIMANN, Juergen, 71263 Weil Der Stadt (DE); SCHMIDTKE, Bernd, 71229 Leonberg (DE); RIDDERBUSCH, Heiko, 71701 Schwieberdingen (DE)
(86) Internationale Anmeldenummer: PCT/EP2008/058850
(87) Internationale Veröffentlichungsnummer: WO 2009/037016

(56) Entgegenhaltungen:
- EP-A- 0 918 383
- WO-A-2005/066488
- WO-A-2006/125685
- US-A- 5 151 909
- US-A- 5 197 074
- US-A- 5 287 379
- XIE W ET AL: "FLUORESCENCE FEEDBACK CONTROL OF AN ACTIVE Q-SWITCHED DIODE-PUMPED ND:YVO4 LASER", APPLIED OPTICS, OPTICAL SOCIETY OF AMERICA, WASHINGTON, DC; US, vol. 39, no. 6, 20 February 2000 (2000-02-20), pages 978-981, XP000928335, ISSN: 0003-6935, DOI: 10.1364/AO.39.000978

## Beschreibung

### Stand der Technik

Die Erfindung betrifft ein Verfahren zum Betreiben einer Lasereinrichtung, die einen laseraktiven Festkörper mit einer, vorzugsweise passiven, Güteschaltung aufweist, bei dem die Lasereinrichtung mit Pumplicht beaufschlagt wird, um einen Laserimpuls zu erzeugen.

Die Erfindung betrifft ferner eine Lasereinrichtung mit einem eine, vorzugsweise passive, Güteschaltung aufweisenden laseraktiven Festkörper und mit einer eine Lichtleitereinrichtung aufweisenden optischen Verbindung, über die der Lasereinrichtung von einer Pumplichtquelle erzeugtes Pumplicht zuführbar ist, um einen Laserimpuls zu erzeugten.

Die internationale Anmeldung W02006/125685 beschreibt eine Lasereinrichtung mit einem eine Güteschaltung aufweisenden laseraktiven Festkörper, mit einer optischen Verbindung, über die der Lasereinrichtung von einer Pumplichtquelle erzeugtes Pumplicht zuführbar ist, um einen Laserimpuls zu erzeugen.

Aus Appl. Optics, Vol 39, No. 6, seiten 978-981, 20 Februar 2000 ist ein Verfahren zum Betreiben einer Lasereinrichtung, die einen laseraktiven Festkörper mit einer Güteschaltung aufweist, bei dem die Lasereinrichtung mit Pumplicht beaufschlagt wird, um einen Laserimpuls zu erzeugen. Ferner ist eine Lasereinrichtung mit einem eine Güteschaltung aufweisenden laseraktiven Festkörper und mit einer, optischen Verbindung, über die der Lasereinrichtung von einer Pumplichtquelle erzeugtes Pumplicht zuführbar ist, um einen Laserimpuls zu erzeugen aus diesem Artikel bekannt. Diese Lasereinrichtung umfasst eine Laserdiode zur Erzeugung einer Pumpstrahlung zur Beaufschlagung der Lasereinrichtung und zwei optische Linsen zur Übertragung einer in Reaktion auf die Pumpstrahlung entstehenden spontan emittierten Strahlung von der Lasereinrichtung an eine Auswerteinrichtung.

### Offenbarung der Erfindung

Es ist Aufgabe der vorliegenden Erfindung, eine Lasereinrichtung und ein Betriebsverfahren der eingangs genannten Art dahingehend zu verbessern, dass eine gesteigerte Sicherheit bei dem Betreib der Lasereinrichtung gegeben und eine einfache Erkennung von Fehlern möglich ist.

Diese Aufgabe wird bei einem Betriebsverfahren der eingangs genannten Art erfindungsgemäß dadurch gelöst, dass die Lasereinrichtung und/oder eine optische Verbindung zwischen der Lasereinrichtung und einer das Pumplicht bereitstellenden Pumplichtquelle zumindest teilweise mit einem, insbesondere optischen, Prüfimpuls beaufschlagt wird, um die Integrität einer/der optischen Verbindung zwischen der Lasereinrichtung und einer das Pumplicht bereitstellenden Pumplichtquelle zu überprüfen.

Die erfindungsgemäße Beaufschlagung mit einem speziellen Prüfimpuls ermöglicht vorteilhaft, einen Betriebszustand der Lasereinrichtung zu ermitteln, noch bevor die Lasereinrichtung zur Erzeugung des Laserimpulses mit dem Pumplicht hoher Strahlungsintensität beaufschlagt wird. Auf diese Weise kann bei geeigneter Auswertung der Reaktionen der Lasereinrichtung auf die Beaufschlagung mit dem Prüfimpuls auf ein ordnungsgemäßes Funktionieren der Lasereinrichtung geschlossen werden und damit die Betriebssicherheit und die Personensicherheit gesteigert werden.

Besonders vorteilhaft ist bei einer Ausführungsform des erfindungsgemäßen Betriebsverfahrens vorgesehen, dass charakteristische Eigenschaften des Prüfimpulses, insbesondere dessen Impulsdauer und/oder Amplitude und/oder Impulsenergie so gewählt werden, dass sie vorgebbaren Grenzwerte nicht überschreiten. Vorteilhaft sind die Grenzwerte erfindungsgemäß so gewählt, dass von dem Prüfimpuls keine Gefährdung ausgeht für Personen, die beispielsweise im Rahmen einer Wartung der Lasereinrichtung dem Prüfimpuls ausgesetzt sein könnten, beispielweise aufgrund einer Unterbrechung einer optischen Verbindung zwischen der Pumplichtquelle und der Lasereinrichtung.

Die erfindungsgemäß vorgebbaren Grenzwerte für die charakteristischen Eigenschaften des Prüfimpulses können vorteilhaft an amtliche oder sonstige von anerkannten Institutionen vorgegebene Grenzwerte angelehnt sein. Die erfindungsgemäße Auslegung des Prüfimpulses stellt dabei vorteilhaft sicher, dass einerseits eine Überprüfung der Lasereinrichtung mittels des Prüfimpulses möglich ist, insbesondere noch bevor hochenergetische Pumplichtimpulse abgestrahlt werden, und dass beispielsweise im Falle einer optischen Unterbrechung oder einer sonstigen Beschädigung der Lasereinrichtung von den erfindungsgemäß verwendeten Prüfimpulsen keine Gefährdung für eine Umgebung und insbesondere für anwesende Personen ausgeht. Durch entsprechende Wahl der vorgebbaren Grenzwerte kann ferner eine Beschädigung der Pumplichtquelle selbst durch die Prüfimpulse ausgeschlossen werden.

Eine besonders kleinbauende Konfiguration ergibt sich einer weiteren vorteilhaften Erfindungsvariante zufolge dadurch, dass der Prüfimpuls durch die das Pumplicht bereitstellende Pumplichtquelle erzeugt wird. Insbesondere bei einer Halbleiter-Laserdioden aufweisenden Pumplichtquelle ist vorteilhaft eine einfache Regelung der vorstehend beschriebenen charakteristischen Eigenschaften des Prüfimpulses wie beispielsweise der Amplitude durch Steuerung des dem Diodenlaser zugeführten Stroms gegeben.

Eine ganz besonders hohe Betriebssicherheit der erfindungsgemäßen Lasereinrichtung ist einer weiteren Erfindungsvariante zufolge dadurch gegeben, dass die Prüfimpulse periodisch abgegeben werden, wodurch dementsprechend eine periodische Überprüfung der Lasereinrichtung ermöglich ist. Ganz besonders vorteilhaft wird vor jeder Erzeugung eines regulären Laserimpulses mindestens ein erfindungsgemäßer Prüfimpuls abgegeben und somit die Funktion der Lasereinrichtung überprüft, bevor die Lasereinrichtung zur Erzeugung der regulären Laserimpulse mit hochenergetischem Pumplicht beaufschlagt wird, das bei einer gegebenenfalls vorhandenen Beschädigung der Lasereinrichtung zu deren vollständiger Zerstörung oder auch zur Gefährdung von Personen führen könnte. Auch eine Zerstörung der Pumplichtquelle kann auf diese Weise verhindert werden.

Ganz besonders vorteilhaft ist bei einer weiteren Variante des erfindungsgemäßen Betriebsverfahrens vorgesehen, dass die Lasereinrichtung mit dem Prüfimpuls beaufschlagt wird, und dass in der Lasereinrichtung in Reaktion auf den Prüfimpuls entstehende spontan emittierte Strahlung ausgewertet wird. Durch die Beaufschlagung der Lasereinrichtung mit dem erfindungsgemäßen Prüfimpuls ergibt sich vorteilhaft eine dem Fachmann an sich bekannte Spontanemission, die eine Vielzahl möglicher Auswertungen und dementsprechende Rückschlüsse auf das Funktionieren der Lasereinrichtung zulässt. Beispielsweise kann erfindungsgemäß vorteilhaft die in Reaktion auf den Prüfimpuls entstehende spontan emittierte Strahlung über optische Koppelmittel von der Lasereinrichtung an eine Auswerteinrichtung übertragen werden, die insbesondere eine Fotodiode aufweisen kann zur Wandlung der spontan emittierten Strahlung in ein entsprechendes elektrisches Signal, das beispielsweise durch ein Steuergerät der erfindungsgemäßen Lasereinrichtung auswertbar ist.

Erfindungsgemäß sind die Koppelmittel so ausgebildet, dass sie aus der Lasereinrichtung austretende spontan emittierte Strahlung in eine Lichtleitereinrichtung leiten, insbesondere reflektieren, wobei die Lichtleitereinrichtung erfindungsgemäß gleichzeitig auch für die Zuführung vom Pumplicht zu der Lasereinrichtung verwendet wird. Bei dieser Konfiguration ist vorteilhaft kein separater optischer Kanal zur Übertragung der für die erfindungsgemäße Diagnose verwendeten optischen Informationen erforderlich.

Die erfindungsgemäßen optischen Koppelmittel können vorteilhaft auch mindestens einen Reflektor zur Reflexion von aus der Lasereinrichtung austretender spontan emittierte Strahlung auf eine Lichtleitereinrichtung oder einen Detektor oder dergleichen aufweisen. Der Reflektor kann ganz besonders vorteilhaft durch eine entsprechend beschichtete Innenfläche eines die Lasereinrichtung aufnehmenden Gehäuses ausgebildet sein, so dass sich eine sehr stabile und gleichzeitig klein bauende Anordnung ergibt, bei der die optischen Koppelmittel vorteilhaft quasi einstückig ausgebildet sind mit der Lasereinrichtung bzw. ihrem Gehäuse.

Alternativ zu einer lateralen Auskopplung der spontan emittierten Strahlung aus der Lasereinrichtung kann die spontan emittierte Strahlung zumindest teilweise auch über eine stirnseitige Oberfläche aus der erfindungsgemäßen Lasereinrichtung ausgekoppelt werden. Hierzu sind die erfindungsgemäßen optischen Koppelmittel zumindest teilweise gebildet durch einen Bereich der stirnseitigen Oberfläche der Lasereinrichtung, insbesondere des laseraktiven Festkörpers, der nicht gleichzeitig einen Einkoppelspiegel für das Pumplicht darstellt, so dass die spontan emittierte Strahlung auch stirnseitig aus der Lasereinrichtung austreten kann. Diese erfindungsgemäße Konfiguration erfordert vorteilhaft besonders geringe radiale Abmessungen der Lasereinrichtung.

Bei einer weiteren sehr vorteilhaften Ausführungsform des erfindungsgemäßen Verfahrens, die eine besonders präzise Auswertung eines Betriebszustands der Lasereinrichtung ermöglicht, ist vorgesehen, dass eine Auswerteinrichtung zur Auswertung der spontan emittierten Strahlung so mit dem Prüfimpuls synchronisiert, dass ein Messzeitraum zumindest teilweise zusammenfällt mit einer erwarteten Spontanemission. Diese erfindungsgemäße Verfahrensvariante ermöglicht vorteilhaft eine sichere Auswertung der spontan emittierten Strahlung, ohne gleichzeitig eine Filterung der speziellen Wellenlänge der spontan emittierten Strahlung zu erfordern Auch eine Sättigung eines in der Auswerteinrichtung enthaltenen Fotodetektors kann auf diese Weise vorteilhaft vermieden werden. Die erfindungsgemäße Synchronisation kann beispielsweise dadurch erfolgen, dass unter Kenntnis des verwendeten laseraktiven Materials der Lasereinrichtung und einer entsprechenden Zeitkonstante für die Spontanemission der erwartete Zeitpunkt für Spontanemission festgelegt wird.

Ganz besonders vorteilhaft kann erfindungsgemäß ferner vorgesehen sein, dass der Beginn des Messzeitraums etwa mit dem Ende des Prüfimpulses zusammenfällt, wodurch vorteilhaft sichergestellt ist, dass aufgrund der seitherigen Anregung durch den Prüfimpuls eine maximale Strahlungsintensität der spontan emittierten Strahlung zu Beginn des Messzeitraums gegeben ist. Insbesondere kann bei dieser Verfahrensvariante auch eine den Prüfimpuls zuführende Lichtleitereinrichtung ferner dazu verwendet werden, die spontan emittierte Strahlung an eine Auswerteinheit zu übertragen, da der Messzeitraum nicht überlappt mit der Ausgabe des Prüfimpulses.

In Abhängigkeit der optischen Konfiguration der erfindungsgemäßen Lasereinrichtung, insbesondere der Dämpfung verschiedener zur Realisierung der optischen Verbindung zwischen der Pumplichtquelle und der Lasereinrichtung verwendeter Komponenten, können erfindungsgemäß vorteilhaft Amplitudenmessfenster für die Intensität der auszuwertenden spontan emittierten Strahlung vorgegeben werden. Je nach Übereinstimmung einer tatsächlich auftretenden und beispielsweise durch einen Fotodetektor ermittelten Intensität der spontan emittierten Strahlung mit einem der vorgegebenen Amplitudenmessfenster kann vorteilhaft auf einen speziellen Fehlertyp oder generell Betriebszustand der optischen Verbindung zwischen der Pumplichtquelle und der Lasereinrichtung geschlossen werden. Sofern die Auswerteinheit beispielsweise an dem Ort der Pumplichtquelle angeordnet ist, kann durch die erfindungsgemäße Auswertung der spontan emittierten Strahlung beispielsweise darauf geschlossen werden, dass eine Steckverbindung zwischen einer Lichtleitereinrichtung und der Lasereinrichtung defekt ist, und/oder dass gar keine Lichtleitereinrichtung bzw. überhaupt keine optische Verbindung zwischen der Pumplichtquelle und der Lasereinrichtung besteht, und/oder dass ein Bruch einer Lichtleitfaser der optischen Verbindung vorliegt, und/oder dass eine Steckverbindung zwischen einer Lichtleitereinrichtung der optischen Verbindung und der Pumplichtquelle defekt ist, und/oder dass die Einleitung vom Pumplicht bzw. des Prüfimpulses in die Lasereinrichtung fehlerhaft ist.

Einer weiteren sehr vorteilhaften Erfindungsvariante zufolge wird eine Beaufschlagung mit Pumplicht deaktiviert und/oder eine Fehlerreaktion eingeleitet, wenn eine Beeinträchtigung der Integrität der optischen Verbindung zwischen der Lasereinrichtung und der Pumplichtquelle erkannt worden ist.

Die Fehlerreaktion kann beispielsweise das Anlegen eines Fehlerspeichereintrags in einem die Lasereinrichtung steuernden Steuergerät umfassen.

Das erfindungemäße Prinzip erfordert nicht zwingend die räumliche Zusammenanordnung bzw. die Identität der Pumplichtquelle und der Mittel zur Erzeugung des Prüfimpulses. Vielmehr ist es auch denkbar, Mittel zur Erzeugung eines Prüfimpulses wie beispielsweise eine Leuchtdiode oder dergleichen in die Lasereinrichtung selbst oder in optische Koppelmittel zu integrieren, die zur optischen Kopplung zwischen einer von der Pumplichtquelle zu der Lasereinrichtung verlaufenden optischen Verbindung dienen. Ein entsprechender Detektor kann ebenfalls an unterschiedlichen Einbauorten vorgesehen sein. Neben einer Detektion der infolge des Prüfimpulses entstehenden Spontanemissionen kann auch direkt die Übertragung des Prüfimpulses über eine optische Verbindung überwacht werden.

Als eine weitere Lösung der Aufgabe der vorliegenden Erfindung ist eine Lasereinrichtung gemäß Patentanspruch 13 angegeben.

Eine besonders vorteilhafte Variante der erfindungsgemäßen Lasereinrichtung sieht vor, dass die optischen Koppelmittel zumindest teilweise gebildet sind durch einen lichtleitenden Endabschnitt einer das Pumplicht zuführenden Lichtleitereinrichtung, der vorzugsweise hülsenförmig ausgebildet ist und einen gegenüberliegenden Endbereich der Lasereinrichtung zumindest teilweise umgreift.

Weitere vorteilhafte Ausgestaltungen der erfindungsgemäßen Lasereinrichtung sind Gegenstand der Unteransprüche.

Die erfindungsgemäße Lasereinrichtung eignet sich besonders vorteilhaft zur Verwendung in einer laserbasierten Zündeinrichtung einer Brennkraftmaschine eines Kraftfahrzeugs oder auch eines Stationärmotors.

Weitere Merkmale, Anwendungsmöglichkeiten und Vorteile der Erfindung ergeben sich aus der nachfolgenden Beschreibung von Ausfüfhrungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung.

### Kurze Beschreibung der Zeichnung

In der Zeichnung zeigt:
- Figur 1: eine schematische Darstellung einer Brennkraftmaschine mit einer erfindungsgemäßen Zündeinrichtung,
- Figur 2: eine schematische Darstellung der Zündeinrichtung aus Figur 1,
- Figur 3a - 3c: einen zeitlichen Verlauf verschiedener Betriebsgrößen der erfindungsgemäßen Lasereinrichtung,
- Figur 4: einen zeitlichen Verlauf der Amplitude eines erfindungsgemäßen Prüfimpulses in Bezug auf einen Pumplichtimpuls,
- Figur 5a - 5d: weitere Ausführungsformen der erfindungsgemäßen Lasereinrichtung, und
- Figur 6: ein vereinfachtes Flussdiagramm einer Ausführungsform des erfindungsgemäßen Betriebsverfahrens.

### Ausführungsformen der Erfindung

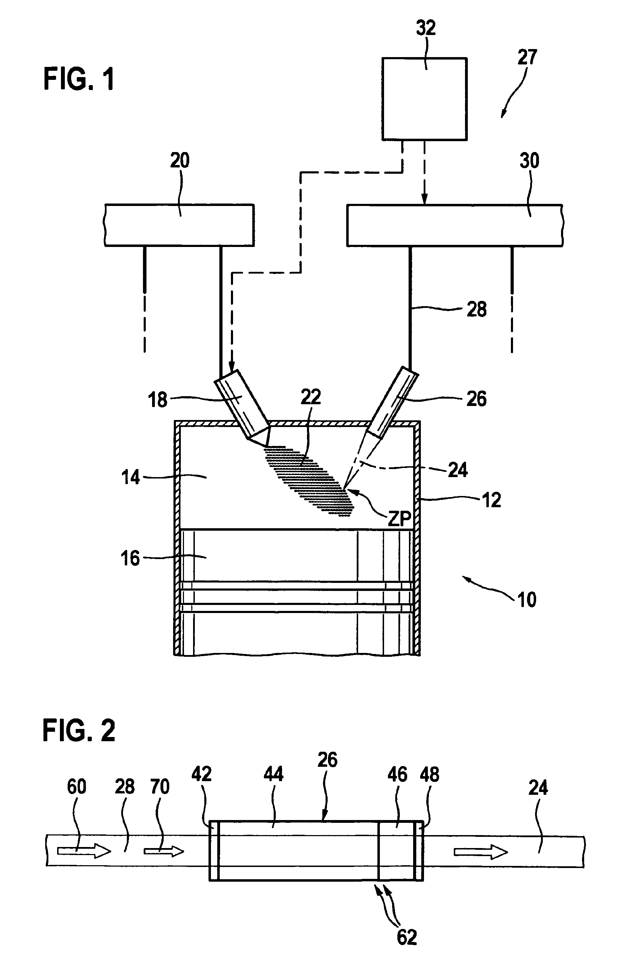

Eine Brennkraftmaschine trägt in Figur 1 insgesamt das Bezugszeichen 10. Sie dient zum Antrieb eines nicht dargestellten Kraftfahrzeugs. Die Brennkraftmaschine 10 umfasst mehrere Zylinder, von denen in Figur 1 nur einer mit dem Bezugszeichen 12 bezeichnet ist. Ein Brennraum 14 des Zylinders 12 wird von einem Kolben 16 begrenzt. Kraftstoff gelangt in den Brennraum 14 direkt durch einen Injektor 18, der an einen auch als Rail bezeichneten Kraftstoff-Druckspeicher 20 angeschlossen ist. Die Brennkraftmaschine kann auch als Saugmotor betrieben werden. Der Kraftstoff wird dabei in das Saugrohr eingespritzt oder eingeblasen und in den Zylinder gesaugt. Nach Verdichtung wird das Gemisch zum Zündzeitpunkt am Zündpunkt durch die Zündeinrichtung 27 gezündet.

In den Brennraum 14 eingespritzter Kraftstoff 22 wird mittels eines Laserstrahls 24 entzündet, der vorzugsweise in Form eines Laserimpulses von einer eine Lasereinrichtung 26 umfassenden Zündeinrichtung 27 in den Brennraum 14 abgestrahlt wird. Hierzu wird die Lasereinrichtung 26 über eine Lichtleitereinrichtung 28 mit einem Pumplicht gespeist, welches von einer Pumplichtquelle 30 bereitgestellt wird. Die Pumplichtquelle 30 wird von einem Steuergerät 32 gesteuert, das auch den Injektor 18 ansteuert.

Eine Detaildarstellung der Lasereinrichtung 26 ist in Figur 2 angegeben. Die Lasereinrichtung 26 weist einen laseraktiven Festkörper 44 sowie eine passive Güteschaltung 46 auf, die zusammen mit einem Einkoppelspiegel 42 und einem Auskoppelspiegel 48 einen Laser-Oszillator bilden. Ausgangsseitig, d.h. in Figur 2 rechts des Auskoppelspiegels 48, kann eine vorliegend nicht abgebildete Fokussieroptik vorgesehen sein, die zur Fokussierung eines von der Lasereinrichtung 26 erzeugten Laserstrahls 24 beziehungsweise Laserimpulses auf einen in Figur 1 schematisch dargestellten Zündpunkt ZP dient, der in dem Brennraum 14 der Brennkraftmaschine 10 angeordnet ist.

Die grundsätzliche Funktionsweise der Lasereinrichtung 26 ist folgende: Pumplicht 60, das der Lasereinrichtung 26 über die Lichtleitereinrichtung 28 zugeführt wird, tritt durch den für eine Wellenlänge des Pumplichts 60 durchsichtigen Einkoppelspiegel 42 in den laseraktiven Festkörper 44 ein. Dort wird das Pumplicht 60 absorbiert, was zu einer Besetzungsinversion führt. Die anfangs hohen Transmissionsverluste der passiven Güteschaltung 46 verhindern zunächst eine Laser-Oszillation in der Lasereinrichtung 26. Mit steigender Pumpdauer steigt jedoch auch die Strahlungsdichte in dem Inneren des durch den laseraktiven Festkörper 44 und die passive Güteschaltung 46 sowie die Spiegel 42, 48 gebildeten Resonators 62. Ab einer gewissen Strahlungsdichte bleicht die passive Güteschaltung 46 beziehungsweise ein sättigbarer Absorber der passiven Güteschaltung 46 aus, so dass eine Laser-Oszillation in dem Resonator 62 zustande kommt.

Durch diesen an sich bekannten Mechanismus wird ein Laserstrahl 24 in Form eines Riesenimpulses erzeugt, der durch den Auskoppelspiegel 48 hindurchtritt und durch eine ggf. vorhandene Fokussieroptik auf den in dem Brennraum 14 befindlichen Zündpunkt ZP fokussiert wird.

Erfindungsgemäß wird die Lasereinrichtung 26 mit einem optischen Prüfimpuls beaufschlagt, um die Integrität der optischen Verbindung zwischen der Lasereinrichtung 26 und der Pumplichtquelle 30 (Figur 1) zu überprüfen. Bei der vorstehend beschriebenen Ausführungsform der erfindungsgemäßen Lasereinrichtung 26 ist die optische Verbindung im Wesentlichen durch die Lichtleitereinrichtung 28 gebildet.

Besonders vorteilhaft kann erfindungsgemäß vorgesehen sein, dass der Prüfimpuls, der in Figur 2 durch den Blockpfeil 70 symbolisiert ist, erzeugt wird von der das Pumplicht 60 liefernden Pumplichtquelle 30, wodurch sich eine besonders klein bauende und kostengünstige Konfiguration der erfindungsgemäßen Zündeinrichtung 27 ergibt.

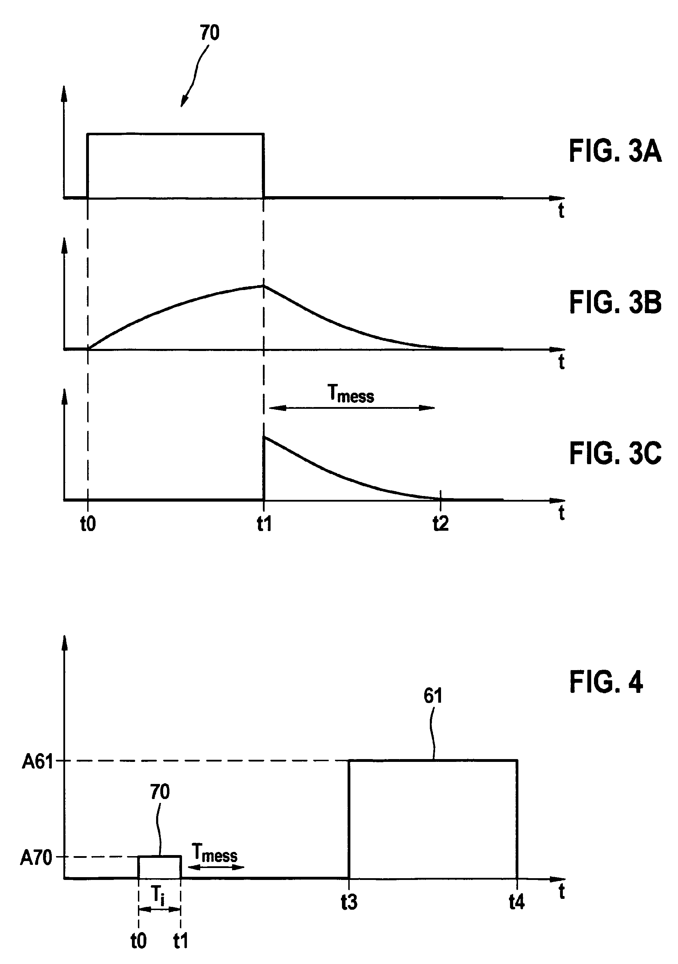

Figur 3a zeigt beispielhaft einen zeitlichen Verlauf der Amplitude einer Intensität des optischen Prüfimpulses 70, der von der Pumplichtquelle 30 zwischen den Zeitpunkten t0, t1 (Figur 3c) ausgegeben und analog zu dem Pumplicht 60 über die Lichtleitereinrichtung 28 der Lasereinrichtung 26 zugeführt wird.

Figur 3b zeigt den sich hierbei ergebenden zeitlichen Verlauf der Intensität von spontan emittierter Strahlung, wie sie in der Lasereinrichtung 26 unter Beaufschlagung mit dem Prüfimpuls 70 entsteht.

Erfindungsgemäß wird diese spontan emittierte Strahlung bzw. ihr zeitlicher Verlauf ausgewertet, um Rückschlüsse auf einen Betriebszustand der Zündeinrichtung 27 zu erhalten. Beispielsweise kann der erfindungemäßen Lasereinrichtung 26 hierzu eine geeignete Auswerteinrichtung zugeordnet sein, die insbesondere über einen Fotodetektor wie beispielsweise eine Fotodiode verfügt, der die spontan emittierte Strahlung zugeleitet wird, und die diese in ein entsprechendes elektrisches Signal umwandelt, das beispielsweise durch die Steuereinrichtung 32 (Figur 1) auswertbar ist.

Das durch die Fotodiode erhaltene elektrische Signal ist beispielhaft in Figur 3c abgebildet.

Erfindungsgemäß erfolgt die Beaufschlagung der Lasereinrichtung 26 mit dem Prüfimpuls 70 vorteilhaft periodisch, insbesondere vor jeder Erzeugung eines regulären Laserimpulses 24, wodurch sich eine besonders hohe Betriebssicherheit der erfindungsgemäßen Lasereinrichtung 26 ergibt.

Figur 4 zeigt beispielhaft den zeitlichen Verlauf einer Amplitude A70 des erfindungsgemäßen Prüfimpulses 70 in Bezug auf den nachfolgenden Pumplichtimpuls 61.

Wie aus Figur 4 ersichtlich ist, erstreckt sich der erfindungsgemäße Prüfimpuls 70 zwischen den Zeitpunkten t0 und t1, wodurch die Impulsbreite Ti = t1 - t0 definiert ist. Die erfindungsgemäße Erfassung der Intensität der in Reaktion auf die Beaufschlagung mit dem Prüfimpuls 70 entstandenen spontan emittierten Strahlung ist vorteilhaft derart mit der Erzeugung des Prüfimpulses 70 synchronisiert, dass sich ein entsprechender Messzeitraum Tmess direkt anschließt an die Erzeugung des Prüfimpulses 70. Das heißt, der vorliegend betrachtete Messzeitraum Tmess erstreckt sich von dem Zeitpunkt t1 bis hin zu einem nicht näher in Figur 4 bezeichneten Zeitpunkt t2, vergleiche auch Figur 3c. Aufgrund dieser Fensterung bei der Messung der spontan emittierten Strahlung weist das in Figur 3c gezeigte, durch die Fotodiode erhaltene elektrische Signal, vorliegend keine nichtverschwindenden Werte für den Zeitbereich t < t1 auf. Durch die Fensterung wird vorteilhaft eine unerwünschte Sättigung der Fotodiode vermieden, die sich ansonsten bei solchen Konfigurationen ergeben kann, bei denen der Prüfimpuls 70 und die zu untersuchenden Spontanemissionen über dieselbe Lichtleitereinrichtung 28 übertragen werden.

Der Zeitpunkt t2 kann unter Kenntnis des verwendeten laseraktiven Materials 44 der Lasereinrichtung 26 und einer entsprechenden Zeitkonstante für die Spontanemission festgelegt werden.

Erst zu einem späteren Zeitpunkt t3 erfolgt erfindungsgemäß gegebenenfalls die Erzeugung des Pumplichtimpulses 61 bis zu dem Zeitpunkt t4, der wie bereits beschrieben zum Aufbau einer Besetzungsinversion in der Lasereinrichtung 26 und damit zur Erzeugung des Laserimpulses 24 vorgesehen ist.

Aus dem zeitlichen Verlauf der Impulse 70, 61 gemäß Figur 4 ist ferner ersichtlich, dass die Amplitude A70 der Intensität des Prüfimpulses 70 weitaus geringer ist als die Amplitude A61 des Pumplichtimpulses 61. Dies ist erfindungsgemäß vorteilhaft vorgesehen, um eine Schädigung von Personen wie beispielsweise Servicetechnikern, die mit einer Wartung der Lasereinrichtung 26 befasst sind, oder von Komponenten der Lasereinrichtung 26 bzw. der Pumplichtquelle 30 selbst zu vermeiden, wenn aufgrund einer Beschädigung die Integrität einer den Prüfimpuls 70 führenden optischen Verbindung 28 der Lasereinrichtung 26 nicht mehr gegeben sein sollte.

Insbesondere können die Impulsdauer Ti und/oder die Amplitude A70 und/oder die Impulsenergie des Prüfimpulses 70 so gewählt werden, dass vorgebbare Grenzwerte nicht überschritten werden. Diese Grenzwerte können vorteilhaft an bestehenden institutionell festgelegten Grenzwerten oder dergleichen orientiert werden.

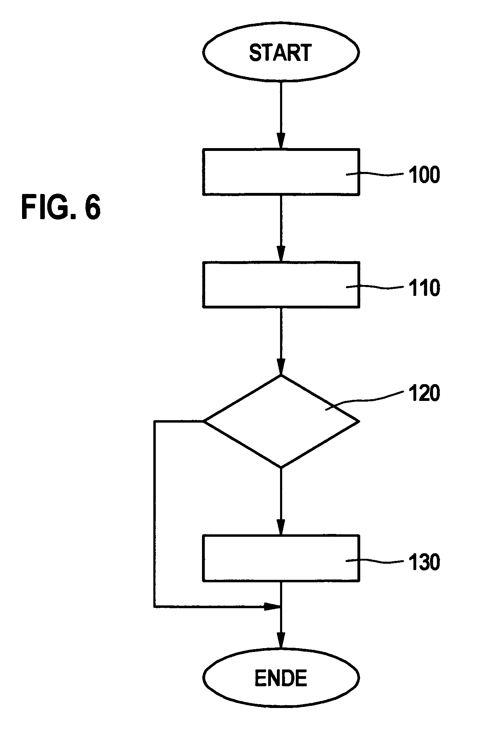

Figur 6 zeigt ein vereinfachtes Flussdiagramm einer Ausführungsform des erfindungsgemäßen Betriebsverfahrens. In einem ersten Schritt 100 wird die Lasereinrichtung 26 mit dem erfindungsgemäßen Prüfimpuls 70 beaufschlagt, der wie vorstehend bereits beschrieben vorteilhaft ebenfalls durch die Pumplichtquelle 30 (Figur 1) generiert wird.

In einem nachfolgenden Schritt 110 wird erfindungsgemäß die in Reaktion auf die Beaufschlagung mit dem Prüfimpuls 70 spontan emittierte Strahlung der Lasereinrichtung 26 analysiert und hieraus auf die Integrität der optischen Verbindung 28 zwischen der Lasereinrichtung 26 und der Pumplichtquelle 30 geschlossen. Ein entsprechendes Auswertungsergebnis wird in dem nachfolgenden Schritt 120 auf Übereinstimmung mit vorgebbaren Sollwerten überprüft. Sofern die Überprüfung 120 auf einen ordnungsgemäßen Betrieb der Lasereinrichtung 26 schließen lässt, wird anschließend in Schritt 130 der reguläre Laserimpuls 24 erzeugt, indem die Lasereinrichtung 26 für eine vorgebbare Zeit mit dem Pumplichtimpuls 61 (Figur 4) beaufschlagt wird.

Sofern jedoch die erfindungsgemäße Überprüfung, vergleiche Schritt 120, ergeben hat, dass die Integrität der optischen Verbindung 28 zwischen der Pumplichtquelle 30 (Figur 1) und der Lasereinrichtung 26 nicht bzw. nicht mehr gegeben ist, wird erfindungsgemäß keine Beaufschlagung der Lasereinrichtung 26 mit Pumplicht 60 durchgeführt, um die Bestrahlung möglicherweise defekter Komponenten der Lasereinrichtung 26 mit dem hochenergetischen Pumplichtimpuls 61 zu vermeiden. Vielmehr kann ein Eintrag in einen Fehlerspeicher z.B. des Steuergeräts 32 geschrieben werden.

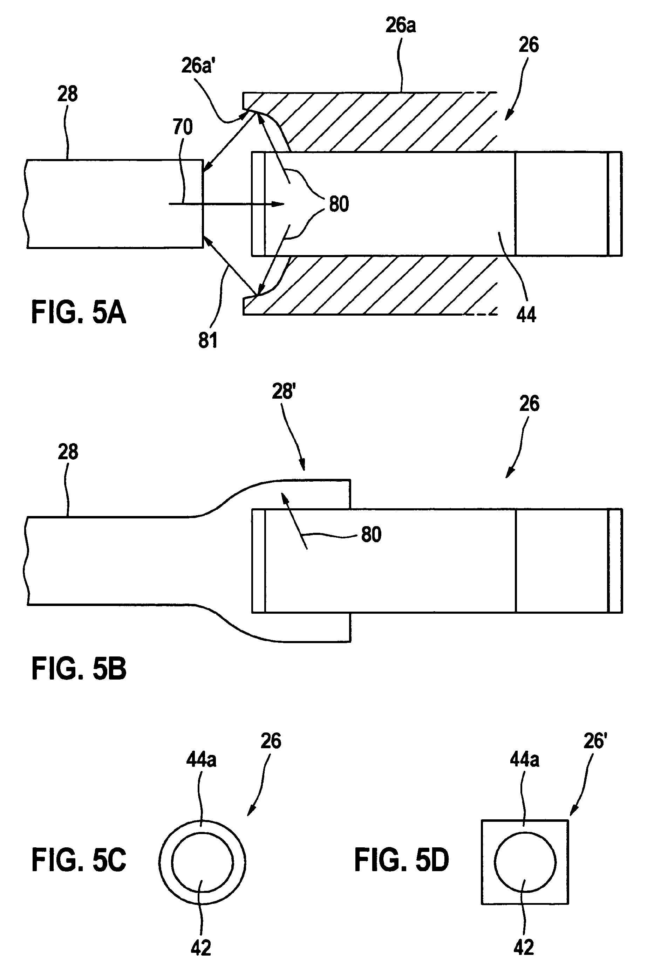

Figur 5a zeigt eine weitere Ausführungsform der erfindungsgemäßen Lasereinrichtung 26, bei der optische Koppelmittel zur Einleitung der spontan emittierten Strahlung 80 aus dem laseraktiven Festkörper 44 in die Lichtleitereinrichtung 28 vorgesehen sind. Erfindungsgemäß sind die optischen Koppelmittel vorteilhaft als Reflektorfläche 26a' ausgebildet, die - wie aus Figur 5a ersichtlich - im Bereich einer Ausnehmung des die Lasereinrichtung 26 aufnehmenden Gehäuses 26a angeordnet ist. Die Geometrie der Reflektorfläche 26a' ist erfindungsgemäß derart gewählt, dass eine möglichst effiziente Reflexion von spontan emittierter Strahlung 80 in die Lichtleitereinrichtung 28 erfolgen kann.

Die Strahlungswege der erfindungsgemäß ausgewerteten spontan emittierten Strahlung 80 sind beispielhaft durch entsprechende Pfeile 80, 81 in Figur 5a abgebildet.

Bei einer weiteren sehr vorteilhaften Ausführungsform der erfindungsgemäßen Lasereinrichtung 26, die in Figur 5b dargestellt ist, sind die optischen Koppelmittel zumindest teilweise gebildet durch einen lichtleitenden Endabschnitt 28' der das Pumplicht 60 zuführenden Lichtleitereinrichtung 28. Der Endabschnitt 28' ist wie aus Figur 5b ersichtlich vorzugsweise hülsenförmig ausgebildet und umgreift zumindest teilweise einen gegenüberliegenden Endbereich der Lasereinrichtung 26, um eine effiziente Einkopplung der spontan emittierten Strahlung 80 in die Lichtleitereinrichtung 28 zu ermöglichen.

Bei einer weiteren sehr vorteilhaften Ausführungsform der erfindungsgemäßen Lasereinrichtung 26 sind die optischen Koppelmittel zumindest teilweise gebildet durch einen Bereich 44a einer stirnseitigen Oberfläche (Figur 5c) der Lasereinrichtung 26, insbesondere des laseraktiven Festkörpers 44, der nicht gleichzeitig einen Einkoppelspiegel 42 für das Pumplicht 60 darstellt. Dadurch ist vorteilhaft die Möglichkeit gegeben, nicht nur das Pumplicht 60, sondern auch die spontan emittierte Strahlung 80 longitudinal in die Lasereinrichtung 26 bzw. aus dieser heraus zu koppeln.

In der Draufsicht gemäß Figur 5c ist die nicht durch den Einkoppelspiegel 42 eingenommene stirnseitige Oberfläche des laseraktiven Festkörpers 44 mit dem Bezugszeichen 44a bezeichnet. Sie weist wie aus Figur 5c ersichtlich eine kreisringförmige Fläche auf, die den Einkoppelspiegel 42 konzentrisch umgibt.

Eine weitere Ausführungsform 26' der erfindungsgemäßen Lasereinrichtung ist in Figur 5d veranschaulicht. Im Gegensatz zu der unter Bezugnahme auf Figur 5c beschriebenen Ausführungsform der Lasereinrichtung 26 weist die Lasereinrichtung 26' gemäß Figur 5d einen quadratischen Querschnitt auf, während der Einkoppelspiegel 42 weiterhin eine kreisförmige Fläche bildet.

Beide Varianten ermöglichen ein effizientes und platzsparendes Auskoppeln von spontan emittierter Strahlung 80 aus der Lasereinrichtung 26 in die Lichtleitereinrichtung 28.

In Abhängigkeit der optischen Konfiguration der erfindungsgemäßen Lasereinrichtung 26, insbesondere der Dämpfung verschiedener zur Realisierung der optischen Verbindung 28 zwischen der Pumplichtquelle 30 und der Lasereinrichtung 26 verwendeter Komponenten, können erfindungsgemäß vorteilhaft Amplitudenmessfenster für die Intensität der auszuwertenden spontan emittierten Strahlung 80 vorgegeben werden. Je nach Übereinstimmung einer tatsächlich auftretenden und beispielsweise durch einen Fotodetektor ermittelten Intensität der spontan emittierten Strahlung 80 mit einem der vorgegebenen Amplitudenmessfenster kann vorteilhaft auf einen speziellen Fehlertyp oder generell Betriebszustand der optischen Verbindung 28 zwischen der Pumplichtquelle 30 und der Lasereinrichtung 26 geschlossen werden.

Sofern die Auswerteinheit beispielsweise an dem Ort der Pumplichtquelle 30 angeordnet ist, kann durch die erfindungsgemäße Auswertung der spontan emittierten Strahlung 80 beispielsweise darauf geschlossen werden, dass eine Steckverbindung zwischen der Lichtleitereinrichtung 28 und der Lasereinrichtung 26 defekt ist, und/oder dass gar keine Lichtleitereinrichtung 28 bzw. überhaupt keine optische Verbindung zwischen der Pumplichtquelle 30 und der Lasereinrichtung 26 besteht, und/oder dass ein Bruch einer Lichtleitfaser der optischen Verbindung vorliegt, und/oder dass eine Steckverbindung zwischen einer Lichtleitereinrichtung 28 der optischen Verbindung und der Pumplichtquelle 30 defekt ist, und/oder dass die Einleitung vom Pumplicht 60 bzw. des Prüfimpulses 70 in die Lasereinrichtung fehlerhaft ist.

Derartige Fehler können beispielsweise daraus abgeleitet werden, dass eine aktuell erfasste Intensität der spontan emittierten Strahlung 80 gegenüber einem z.B. bei einem ordnungsgemäß funktionierenden Neusystem ermittelten Referenzwert abgesunken ist.

Das erfindungsgemäße Prinzip kann generell auch auf Lasereinrichtungen angewandt werden, die in Zündeinrichtungen für Stationärmotoren eingesetzt werden, oder auch auf andere Lasereinrichtungen, bei denen die erfindungsgemäße Funktionsprüfung mittels des Prüfimpulses vor der Beaufschlagung mit Pumplichtimpulsen durchführbar ist.

## Patentansprüche

1. Verfahren zum Betreiben einer Lasereinrichtung (26), die einen laseraktiven Festkörper (44) mit einer, vorzugsweise passiven, Güteschaltung (46) aufweist, bei dem die Lasereinrichtung (26) mit Pumplicht (60) beaufschlagt wird, um einen Laserimpuls (24) zu erzeugen, wobei die Lasereinrichtung (26) mit einem optischen Prüfimpuls (70) beaufschlagt wird, **dadurch gekennzeichnet, dass** mit diesem Prüfimpuls (70) die Integrität der optischen Verbindung zwischen der Lasereinrichtung (26) und einer das Pumplicht (60) bereitstellenden Pumplichtquelle (30) überprüft wird.

2. Verfahren nach Anspruch 1, **dadurch gekennzeichnet, dass** charakteristische Eigenschaften des Prüfimpulses (70), insbesondere dessen Impulsdauer (Ti) und/oder Amplitude (A70) und/oder Impulsenergie, so gewählt werden, dass sie vorgebbare Grenzwerte nicht überschreiten, wobei die Grenzwerte vorzugsweise so gewählt sind, dass von dem Prüfimpuls (70) keine Gefährdung für dem Prüfimpuls (70) ausgesetzten Bedienpersonen ausgeht.

3. Verfahren nach einem der vorstehenden Ansprüche, **dadurch gekennzeichnet, dass** der Prüfimpuls (70) durch die das Pumplicht (60) bereitstellende Pumplichtquelle (30) erzeugt wird.

4. Verfahren nach einem der vorstehenden Ansprüche, **dadurch gekennzeichnet, dass** periodisch Prüfimpulse (70) abgegeben werden, insbesondere vor einer bzw. jeder Erzeugung eines Laserimpulses (24).

5. Verfahren nach einem der vorstehenden Ansprüche, **dadurch gekennzeichnet, dass** die Lasereinrichtung (26) mit dem Prüfimpuls (70) beaufschlagt wird, und dass in der Lasereinrichtung (26) in Reaktion auf den Prüfimpuls (70) entstehende spontan emittierte Strahlung (80) ausgewertet wird.

6. Verfahren nach Anspruch 5, **dadurch gekennzeichnet, dass** die in Reaktion auf den Prüfimpuls (70) entstehende spontan emittierte Strahlung (80) über optische Koppelmittel von der Lasereinrichtung (26) an eine Auswerteinrichtung übertragen wird.

7. Verfahren nach Anspruch 6, **dadurch gekennzeichnet, dass** die Koppelmittel aus der Lasereinrichtung (26) austretende spontan emittierte Strahlung (80) in eine Lichtleitereinrichtung (28) leiten, insbesondere reflektieren, die vorzugsweise auch für die Zuführung von Pumplicht (60) zu der Lasereinrichtung (26) verwendet wird.

8. Verfahren nach einem der Ansprüche 6 bis 7, **dadurch gekennzeichnet, dass** die spontan emittierte Strahlung (80) zumindest teilweise über eine stirnseitige Oberfläche (44a) aus der Lasereinrichtung (26) ausgekoppelt wird.

9. Verfahren nach einem der Ansprüche 5 bis 8, **dadurch gekennzeichnet, dass** eine Auswerteinrichtung zur Auswertung der spontan emittierten Strahlung (80) so mit dem Prüfimpuls (70) synchronisiert wird, dass ein Messzeitraum (Tmess) zumindest teilweise zusammenfällt mit einer erwarteten Spontanemission.

10. Verfahren nach Anspruch 9, **dadurch gekennzeichnet, dass** der Beginn (t1) des Messzeitraums (Tmess) etwa mit dem Ende des Prüfimpulses (70) zusammenfällt.

11. Verfahren nach einem der Ansprüche 5 bis 10, **dadurch gekennzeichnet, dass** Amplitudenmessfenster für die Intensität der auszuwertenden spontan emittierten Strahlung (80) vorgegeben werden, und dass in Abhängigkeit der Übereinstimmung einer tatsächlich auftretenden Intensität mit einem der Amplitudenmessfenster auf einen Betriebszustand der optischen Verbindung zwischen der Lasereinrichtung (26) und der Pumplichtquelle (30) geschlossen wird.

12. Verfahren nach einem der vorstehenden Ansprüche, **dadurch gekennzeichnet, dass** eine Beaufschlagung mit Pumplicht (60) deaktiviert und/oder eine Fehlerreaktion eingeleitet wird, wenn eine Beeinträchtigung der Integrität der optischen Verbindung zwischen der Lasereinrichtung (26) der Pumplichtquelle (30) erkannt worden ist.

13. Lasereinrichtung (26) mit einem eine, vorzugsweise passive, Güteschaltung (46) aufweisenden laseraktiven Festkörper (44), und mit einer optischen Verbindung, über die der Lasereinrichtung (26) von einer Pumplichtquelle (30) erzeugtes Pumplicht (60) zuführbar ist, um einen Laserimpuls (24) zu erzeugen, umfassend Mittel zur Erzeugung eines optischen Prüfimpulses (70) zur Beaufschlagung der Lasereinrichtung (26) und optische Koppelmittel zur Übertragung einer in Reaktion auf den Prüfimpuls (70) entstehenden spontan emittierten Strahlung (80) von der Lasereinrichtung (26) an eine Auswerteinrichtung, **dadurch gekennzeichnet, dass** die optische Verbindung eine Lichtleitereinrichtung (28) aufweist und dass die optischen Koppelmittel ausgebildet sind, die aus der Lasereinrichtung (26) austretende spontan emittierte Strahlung in die Lichtleitereinrichtung (28) zu leiten.

14. Lasereinrichtung (26) nach Anspruch 13, **dadurch gekennzeichnet, dass** die Mittel zur Erzeugung des Prüfimpulses (70) in die Pumplichtquelle (30) integriert oder durch die Pumplichtquelle (30) gebildet sind.

15. Lasereinrichtung (26) nach Anspruch 13, **dadurch gekennzeichnet, dass** die optischen Koppelmittel mindestens einen Reflektor aufweisen, um aus der Lasereinrichtung (26) austretende spontan emittierte Strahlung (80) in eine Lichtleitereinrichtung (28) der optischen Verbindung zu leiten.

16. Lasereinrichtung (26) nach einem der Ansprüche 13 bis 15, **dadurch gekennzeichnet, dass** die optischen Koppelmittel zumindest teilweise gebildet sind durch einen Bereich (44a) einer stirnseitigen Oberfläche der Lasereinrichtung (26), insbesondere des laseraktiven Festkörpers (44), der nicht gleichzeitig einen Einkoppelspiegel (42) für das Pumplicht (60) darstellt.

17. Lasereinrichtung (26) nach einem der Ansprüche 13 bis 16, **dadurch gekennzeichnet, dass** die optischen Koppelmittel zumindest teilweise gebildet sind durch einen lichtleitenden Endabschnitt (28') einer das Pumplicht (60) zuführenden Lichtleitereinrichtung (28), der vorzugsweise hülsenförmig ausgebildet ist und einen gegenüberliegenden Endbereich der Lasereinrichtung (26) zumindest teilweise umgreift.

18. Zündeinrichtung (27) insbesondere für eine Brennkrafunaschine (10) insbesondere eines Kraftfahrzeugs, **gekennzeichnet durch** mindestens eine Lasereinrichtung (26) nach einem der Ansprüche 13 bis 17.

## Claims

1. Method for operating a laser device (26) having a laser-active solid (44) with a, preferably passive, Q-switch (46), wherein pump light (60) is applied to the laser device (26) in order to generate a laser pulse (24) wherein an optical test pulse (70) is applied to the laser device (26), **characterized in that** said test pulse (70) is used to check the integrity of the optical connection between the laser device (26) and a pump light source (30) providing the pump light (60).

2. Method according to Claim 1, **characterized in that** characteristic properties of the test pulse (70), in particular its pulse duration (Ti) and/or amplitude (A70) and/or pulse energy, are chosen such that they do not exceed predefinable limit values, wherein the limit values are preferably chosen such that the test pulse (70) does not endanger the operating persons exposed to the test pulse (70).

3. Method according to either of the preceding claims, **characterized in that** the test pulse (70) is generated by the pump light source (30) providing the pump light (60).

4. Method according to any of the preceding claims, **characterized in that** test pulses (70) are emitted periodically, in particular before a or each generation of a laser pulse (24).

5. Method according to any of the preceding claims, **characterized in that** the test pulse (70) is applied to the laser device (26), and **in that** spontaneously emitted radiation (80) arising in reaction to the test pulse (70) in the laser device (26) is evaluated.

6. Method according to Claim 5, **characterized in that** the spontaneously emitted radiation (80) arising in reaction to the test pulse (70) is transmitted via optical coupling means from the laser device (26) to an evaluation device.

7. Method according to Claim 6, **characterized in that** the coupling means guide, in particular reflect, spontaneously emitted radiation (80) emerging from the laser device (26) into an optical waveguide device (28), which is preferably also used for feeding pump light (60) to the laser device (26).

8. Method according to either of Claims 6 and 7, **characterized in that** the spontaneously emitted radiation (80) is coupled out from the laser device (26) at least partly via an end-side surface (44a).

9. Method according to any of Claims 5 to 8, **characterized in that** an evaluation device for evaluating the spontaneously emitted radiation (80) is synchronized with the test pulse (70) such that a measurement time period (Tmeas) at least partly coincides with an expected spontaneous emission.

10. Method according to Claim 9, **characterized in that** the beginning (t1) of the measurement time period (Tmeas) coincides approximately with the end of the test pulse (70).

11. Method according to any of Claims 5 to 10, **characterized in that** amplitude measurement windows are predefined for the intensity of the spontaneously emitted radiation (80) to be evaluated, and **in that** an operating state of the optical connection between the laser device (26) and the pump light source (30) is deduced depending on the correspondence of an actually occurring intensity to one of the amplitude measurement windows.

12. Method according to any of the preceding claims, **characterized in that** application of pump light (60) is deactivated and/or a fault reaction is initiated if an impairment of the integrity of the optical connection between the laser device (26) and the pump light source (30) has been identified.

13. Laser device (26) comprising a laser-active solid (44) having a, preferably passive, Q-switch (46), and comprising an optical connection via which pump light (60) generated by a pump light source (30) can be fed to the laser device (26) in order to generate a laser pulse (24), comprising means for generating an optical test pulse (70) for application to the laser device (26) and optical coupling means for transmitting a spontaneously emitted radiation (80) arising in reaction to the test pulse (70) from the laser device (26) to an evaluation device, **characterized in that** the optical connection has an optical waveguide device (28), and **in that** the optical coupling means are designed to guide the spontaneously emitted radiation emerging from the laser device (26) into the optical waveguide device (28).

14. Laser device (26) according to Claim 13, **characterized in that** the means for generating the test pulse (70) are integrated into the pump light source (30) or are formed by the pump light source (30).

15. Laser device (26) according to Claim 13, **characterized in that** the optical coupling means have at least one reflector in order to guide spontaneously emitted radiation (80) emerging from the laser device (26) into an optical waveguide device (28) of the optical connection.

16. Laser device (26) according to any of Claims 13 to 15, **characterized in that** the optical coupling means are at least partly formed by a region (44a) of an end-side surface of the laser device (26), in particular of the laser-active solid (44), which does not simultaneously constitute a coupling-in mirror (42) for the pump light (60).

17. Laser device (26) according to any of Claims 13 to 16, **characterized in that** the optical coupling means are at least partly formed by a light-guiding end section (28') of an optical waveguide device (28) that feeds the pump light (60), said end section preferably being embodied in sleeve-shaped fashion and at least partly reaching around an opposite end region of the laser device (26).

18. Ignition device (27) in particular for an internal combustion engine (10) in particular of a motor vehicle, **characterized by** at least one laser device (26) according to any of Claims 13 to 17.

## Revendications

1. Procédé d'utilisation d'un dispositif laser (26) qui présente un corps solide (44) à activité laser doté d'un déclenchement (46) de préférence passif,
le dispositif laser (26) recevant une lumière de pompage (60) pour délivrer une impulsion laser (24),
le dispositif laser (26) recevant une impulsion optique de vérification (70),
**caractérisé en ce que**
cette impulsion de vérification (70) est utilisée pour vérifier l'intégrité de la liaison optique entre le dispositif laser (26) et une source (30) de lumière de pompage qui délivre la lumière de pompage (60).

2. Procédé selon la revendication 1, **caractérisé en ce que** les propriétés optiques de l'impulsion de vérification (70), en particulier la durée (Ti) et/ou l'amplitude (A70) et/ou l'énergie des impulsions, sont sélectionnées de manière à ne pas dépasser des valeurs limites prédéterminées, les valeurs limites étant de préférence sélectionnées de telle sorte que le personnel de service exposé aux impulsions de vérification (70) ne soit pas mis en danger par les impulsions de vérification (70).

3. Procédé selon l'une des revendications précédentes, **caractérisé en ce que** l'impulsion de vérification (70) est formée par la source (30) de lumière de pompage qui délivre la lumière de pompage (60).

4. Procédé selon l'une des revendications précédentes, **caractérisé en ce que** des impulsions de vérification (70) sont délivrées périodiquement, en particulier avant la production d'une impulsion laser (24) ou de chacune de ces impulsions.

5. Procédé selon l'une des revendications précédentes, **caractérisé en ce que** le dispositif laser (26) reçoit l'impulsion de vérification (70) et **en ce que** le rayonnement (80) émis spontanément dans le dispositif laser (26) en réponse à l'impulsion de vérification (70) est évalué.

6. Procédé selon la revendication 5, **caractérisé en ce que** le rayonnement (80) émis spontanément en réaction à l'impulsion de vérification (70) est transféré du dispositif laser (26) à une unité d'évaluation par des moyens de couplage optique.

7. Procédé selon la revendication 6, **caractérisé en ce que** les moyens de couplage conduisent et en particulier réfléchissent le rayonnement (80) émis spontanément par le dispositif laser (26) dans un dispositif (28) conducteur de lumière qui est de préférence utilisé également pour amener la lumière de pompage (60) au dispositif laser (26).

8. Procédé selon l'une des revendications 6 et 7, **caractérisé en ce qu'**au moins une partie du rayonnement (80) émis spontanément est extraite du dispositif laser (26) par une surface frontale (44a).

9. Procédé selon l'une des revendications 5 à 8, **caractérisé en ce qu'**un dispositif d'évaluation qui évalue le rayonnement (80) émis spontanément est synchronisé par rapport à l'impulsion de vérification (70) de telle sorte que la durée de mesure (Tmess) coïncide au moins en partie avec une émission spontanée attendue.

10. Procédé selon la revendication 9, **caractérisé en ce que** le début (t1) de la durée de mesure (Tmess) coïncide sensiblement avec la fin de l'impulsion de vérification (70).

11. Procédé selon l'une des revendications 5 à 10, **caractérisé en ce que** la fenêtre d'amplitude de l'intensité du rayonnement (80) émis spontanément et à évaluer est prédéterminée et **en ce que** des conclusions sont tirées sur l'état de fonctionnement de la liaison optique entre le dispositif laser (26) et la source (30) de lumière de pompage en fonction de la correspondance entre l'intensité effective et la fenêtre de mesure d'amplitude.

12. Procédé selon l'une des revendications précédentes, **caractérisé en ce que** l'alimentation en lumière de pompage (60) est désactivée et/ou une réaction d'erreur est lancée si l'intégrité de la liaison optique entre le dispositif laser (26) et la source (30) de lumière de pompage s'est avérée détériorée.

13. Dispositif laser (26) présentant un corps solide (44) à activité laser qui présente un déclenchement (46) de préférence passif et une liaison optique par laquelle la lumière de pompage (60) produite par une source (30) de lumière de pompage peut être apportée au dispositif laser (26) pour qu'il délivre une impulsion laser (24),
le dispositif laser comprenant des moyens de formation d'une impulsion optique de vérification (70) appliquée sur le dispositif laser (26) et des moyens optiques de couplage qui transfèrent à un dispositif d'évaluation un rayonnement (80) émis spontanément par le dispositif laser (26) en réaction à l'impulsion de vérification (70),
**caractérisé en ce que**
la liaison optique présente un dispositif (28) conducteur de lumière et
**en ce que** les moyens de couplage optique sont configurés pour conduire dans le dispositif (28) conducteur de lumière le rayonnement émis spontanément par le dispositif laser (26).

14. Dispositif laser (26) selon la revendication 13, **caractérisé en ce que** les moyens de formation de l'impulsion de vérification (70) sont intégrés dans la source (30) de lumière de pompage ou sont formés par la source (30) de lumière de pompage.

15. Dispositif laser (26) selon la revendication 13, **caractérisé en ce que** les moyens de couplage optique présentent au moins un réflecteur qui conduit le rayonnement (80) émis spontanément par le dispositif laser (26) dans un dispositif (28) conducteur de lumière de la liaison optique.

16. Dispositif laser (26) selon l'une des revendications 13 à 15, **caractérisé en ce qu'**au moins une partie des moyens de couplage optique sont formés par une partie (44a) d'une surface frontale du dispositif laser (26) et en particulier du corps solide (44) à activité laser qui ne représente pas en même temps un miroir (42) d'injection de la lumière de pompage (60).

17. Dispositif laser (26) selon l'une des revendications 13 à 16, **caractérisé en ce que** les moyens de couplage optique sont formés au moins en partie par une partie d'extrémité (28') conductrice de lumière d'un dispositif (28) conducteur de la lumière qui apporte la lumière de pompage (60), la partie d'extrémité étant de préférence configurée en forme de douille et entourant au moins en partie une partie d'extrémité opposée du dispositif laser (26).

18. Dispositif d'allumage (27), en particulier pour un moteur à combustion interne (10), en particulier d'un véhicule automobile, **caractérisé par** au moins un dispositif laser (26) selon l'une des revendications 13 à 17.
